# EUROPEAN PATENT APPLICATION

(11) **EP 4 553 978 A1**
(43) Date of publication of application: **14.05.2025**
(21) Application number: 24188136.6
(22) Date of filing: 11.07.2024
(51) Int. Cl.: H01M 50/289, H01M 50/342

(54) **SECONDARY BATTERY**

(30) Priority: 07.11.2023 KR 20230152311
(71) Applicant: SAMSUNG SDI CO., LTD., Giheung-gu Yongin-si, Gyeonggi-do 17084 (KR)
(72) Inventor: RYU, Jae Lim, 17084 Yongin-si (KR); KIM, Hyun, 17084 Yongin-si (KR); BAE, Kwang Soo, 17084 Yongin-si (KR)
(74) Representative: Marks & Clerk LLP

(57) **Abstract**

A secondary battery includes: an electrode assembly; a case accommodating the electrode assembly; a cap plate coupled to an opening in the case; and a spacer in the case. The case has a vent part extending through a surface facing the cap plate, and the spacer is accommodated in the case between a lower portion of the electrode assembly and the vent part. The spacer has: a surface portion contacting the electrode assembly and a space portion below the surface portion; an opening in an area of the surface portion corresponding to the vent part; and a gas discharge hole extending around the opening. Gas generated in the case is discharged to the outside through the vent part via the space portion and the gas discharge hole in the spacer.

## Description

### BACKGROUND

### 1. Field

Aspects of embodiments of the present disclosure relate to a secondary battery.

### 2. Description of the Related Art

Secondary batteries are designed to be chargeable and dischargeable, unlike primary batteries.

Small-capacity secondary batteries may be used in small, portable electronic devices, such as mobile phones, laptop computers, and camcorders, while high-capacity secondary batteries may be used as power sources for driving motors in hybrid vehicles and electric vehicles.

Generally, a secondary battery includes an electrode assembly that performs a charging/discharging operation, a case accommodating the electrode assembly, a cap plate coupled to an opening in the case, and an electrode terminal that draws the electrode assembly to the outside of the cap plate.

In some secondary batteries, a vent part is provided in the case, which is designed to burst in response to increased pressure inside the case before another portion of the case bursts, thereby ensuring the safe flow of gas away from the secondary battery. Generally, the vent part is provided on an upper surface of the case adjacent to the electrode terminal. Recent secondary battery designs have placed the vent part at a bottom of the case opposite to the electrode terminal, also referred to as a downward vent structure. However, a spacer is often included at the bottom of the case to fix the jelly-roll electrode assembly, and the spacer can impede the smooth flow of gas from inside the case to outside the case through the vent part when it is arranged in the bottom of the case.

The above-described information disclosed in the technology that serves as the background of the present disclosure is for improving understanding of the background of the present disclosure and, thus, may include information that does not constitute the related art.

### SUMMARY

Embodiments of the present disclosure provide a secondary battery including a spacer that fixes (e.g., fixes a position of) an electrode assembly and has (or provides) a discharge passage for the smooth discharge of a gas when a vent part is disposed at a lower portion of a case opposite to an electrode terminal, also known as a downward vent structure.

However, aspects and features of the present disclosure are not limited to those described above, and other aspects and features not mentioned will be clearly understood by those skilled in the art from the description of the present disclosure described below.

According to an embodiment of the present disclosure, a secondary battery includes: an electrode assembly; a case accommodating the electrode assembly; a cap plate coupled to an opening in the case; and a spacer in the case. The case has a vent part extending through a surface facing the cap plate, and the spacer is accommodated in the case between a lower portion of the electrode assembly and the vent part. The spacer has: a surface portion contacting the electrode assembly and a space portion below the surface portion; an opening in an area of the surface portion corresponding to the vent part; and a gas discharge hole extending around the opening. Gas generated in the case is discharged to the outside through the vent part via the space portion and the gas discharge hole in the spacer.

The gas discharge hole may extend through the surface portion of the spacer and may be provided in plurality, and the plurality of gas discharge holes may be arranged in longitudinal and transverse directions in the surface portion.

The spacer may have an outer wall protruding downwardly along a periphery of the surface portion and an inner wall protruding downwardly along a periphery of the opening in the spacer. The surface portion may be spaced apart from a lower bottom surface of the case in which the vent part is formed by the outer wall and the inner wall, and the space portion may be surrounded by the surface portion, the outer wall, the inner wall, and the lower bottom surface of the case.

The outer wall may be continuously arranged along a long side and a short side of the spacer, a plurality of exhaust holes may be in the outer wall and the inner wall on the short side, and the inside of the case may communicate with the space portion of the spacer via the exhaust holes.

The exhaust holes in the outer wall and the exhaust holes in the inner wall may be in one-to-one correspondence with each other, and the corresponding exhaust holes may be arranged in a straight line.

The gas discharge holes arranged in the longitudinal direction may be arranged above a straight path that connects the exhaust holes in the outer wall to the exhaust holes in the inner wall.

The spacer may be spaced a distance from an inner surface of the case in the longitudinal direction.

At least some of the above and other features of the invention are set out in the claims.

### BRIEF DESCRIPTION OF DRAWINGS

The following drawings attached to this specification illustrate embodiments of the present disclosure to further describe aspects and features of the present disclosure along with the detailed description of the present disclosure, and thus, the present disclosure should not be limited to the embodiments illustrated in the drawings. In the drawings:
FIG. 1 illustrates a projective perspective view of a secondary battery according to embodiments;
FIG. 2 illustrates a cross-sectional view of the secondary battery shown in FIG. 1;
FIG. 3 illustrates a perspective view of a spacer of the secondary battery shown in FIG. 1;
FIG. 4 illustrates a view of the spacer shown in FIG. 3 from different angles.
FIG. 5 is a comparative view of results of an experiment on flow distribution of a gas in secondary batteries including a spacer according to the related art and a spacer according to an embodiment of the present disclosure;
FIG. 6A illustrates a perspective view of a secondary battery according to the related art;
FIG. 6B illustrates a projective perspective view of a secondary battery according to the related art; and
FIG. 6C illustrates a cross-sectional view of the related art secondary battery shown in FIG. 6B.

### DETAILED DESCRIPTION

Hereinafter, embodiments of the present disclosure will be described below in more detail with reference to the accompanying drawings. The terms used in the following description and claims are not limited to their dictionary meanings but are merely used to enable a clear and consistent understanding of the present disclosure. Accordingly, it should be apparent to those skilled in the art that the following description of embodiments of the present disclosure is provided for illustration purposes and not for the purpose of limiting the present disclosure, which is defined by the appended claims and their equivalents. Thus, because the embodiments described in this specification and the configurations shown in the drawings are only some embodiments of the present disclosure and do not represent all of the embodiments, aspects, or features of the present disclosure, it should be understood that there may be various equivalents and modifications that can be substituted for them at the time of this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In some embodiments of the [cylindrical/prismatic/pouch]-type battery according to an embodiment of the present disclosure, one of the prismatic/pouch/circular batteries is selected, and the selected battery is described as having a general structure, and for commonly applied technologies, the general structure of prismatic/pouch/round cells is described.

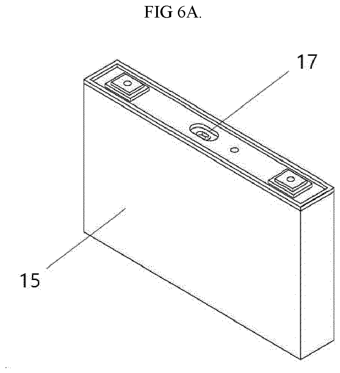

Referring to FIG. 6A, which shows a secondary battery according to a comparative example, a vent part 17 may be provided in the case 15 of the secondary battery. In the vent part 17, a vent plate may be coupled to a lower portion of a vent hole defined in the case 15. Because the vent plate is thinner than a portion of the case 15, if an internal pressure of the case 15 increases due to overcharging, the vent plate is broken (or bursts) before other portions of the case 15 to discharge the high-temperature gas and pressure to the outside, thereby ensuring safety of the secondary battery.

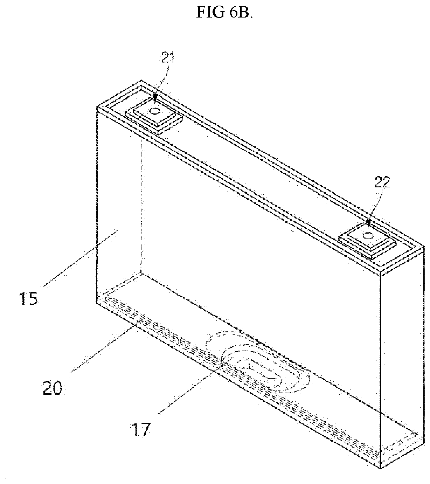

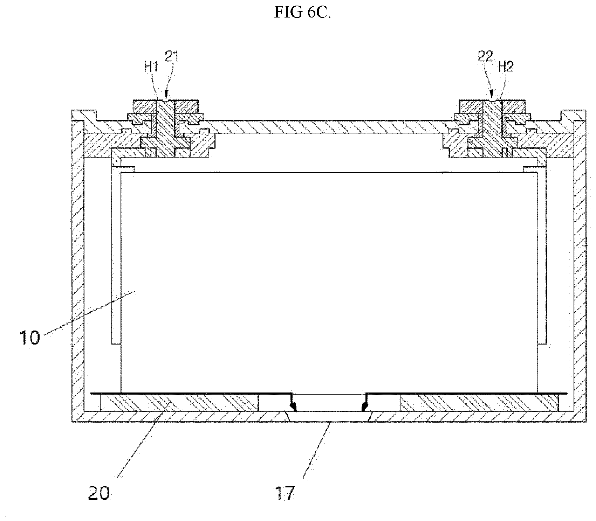

Referring to FIGS. 6B and 6C, a structure in which the vent part 17 is disposed on a bottom surface of the case 15 instead of at an upper portion of the case 15 has been proposed. For example, the vent part 17 is disposed at a side of the case 15 opposite to the electrode terminals 21, 22, a vent hole is defined in the bottom surface of the case 15, and a notched vent plate is sealed and coupled to the vent hole. If a high-pressure gas is generated inside the secondary battery, the vent plate disposed at the lower portion of the case 15 is broken (e.g., bursts) to cause a pressure difference inside and outside the case, and thus, the gas moves toward a lower side of the case 15 due to the pressure difference and is then discharged to the outside through the vent hole.

A spacer 20 may be interposed between a lower end of the electrode assembly 10 and the bottom surface of the case 15. The spacer 20 fixes a jelly-roll electrode assembly 10 so that it is not shaken or moved within the case 15. In addition, the spacer 20 is made of an insulating material to maintain insulation between the electrode assembly 10 and the case 15 and protects the electrode assembly 10 by buffering an external impact.

However, when the vent part 17 is disposed on a bottom surface of the case 15, the spacer 20 disposed on the bottom surface of the case 15 covers the vent part 17, thereby blocking a gas discharge path toward the vent part 17 and causing restriction in smooth gas discharge. Furthermore, because the spacer 20 does not have a separate gas flow path, it is difficult to smoothly discharge the gas.

In this case, there is a risk that an internal pressure of the cell rises rapidly and causes explosion of a welded surface of the secondary battery, thereby accelerating explosion of surrounding cells. Thus, a flow path should be ensured to provide for smooth gas discharge.

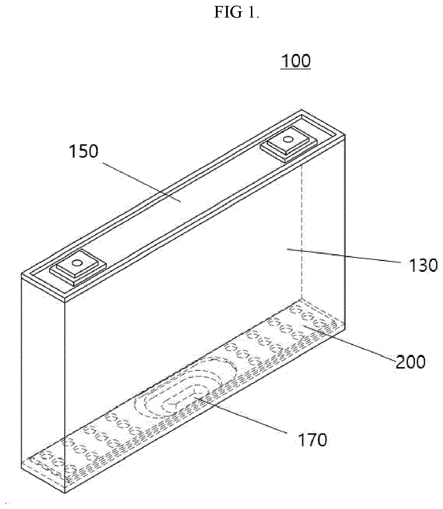

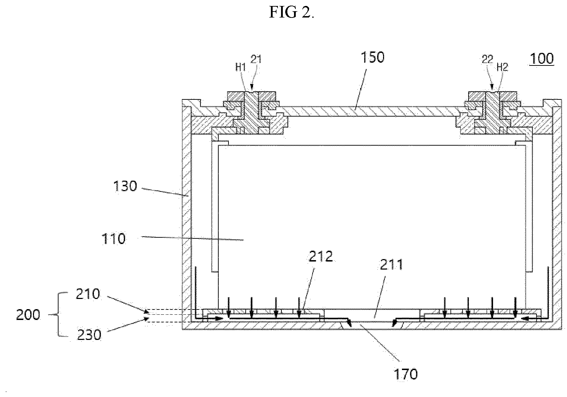

As illustrated in FIGS. 1 and 2, a secondary battery 100 according to embodiments of the present disclosure includes an electrode assembly 110, a case 130, and a cap plate 150.

The electrode assembly 110 may be provided by winding or stacking a stack of a first electrode plate, a separator, and a second electrode plate, each of which is provided in a thin plate or film shape. If the electrode assembly 110 is a rolled stack, a winding axis may be parallel to a longitudinal direction of the case 130. In some embodiments, the electrode assembly 110 may be a stack type rather than a winding type, and the shape of the electrode assembly 110 is not limited to the embodiments. In some embodiments, the electrode assembly 110 may include a Z-stack electrode assembly 110 in which a positive electrode plate and a negative electrode plate are inserted into both sides of the separator, which is bent in the form of a Z-stack. In some embodiments, the electrode assembly 110 may be stacked so that one or more electrode assemblies 110 are adjacent to each other and are accommodated in the case 130. In some embodiments, the number of electrode assemblies 110 may not be limited thereto. In some embodiments, the first electrode plate of the electrode assembly 110 may act as a negative electrode, and the second electrode plate may act as a positive electrode. In other embodiments, the first electrode plate may act as a positive electrode, and the second electrode plate may act as a negative electrode.

The first electrode plate may be formed by applying a first electrode active material, such as graphite or carbon, to a first electrode current collector plate made of a metal foil, such as copper, a copper alloy, nickel, or a nickel alloy. The first electrode plate may include a first electrode tab (e.g., a first non-coating portion) that is a portion of the first electrode current collector plate not coated with the first electrode active material. The first electrode tab may act as a path for a current flow between the first electrode plate and a first current collector. In some embodiments, the first electrode tab may be provided by being cut in advance to protrude to one side when the first electrode plate is manufactured and may protrude more to one side than (e.g., may protrude beyond) a separator without separate cutting.

The second electrode plate may be provided by applying a second electrode active material, such as transition metal oxide, to a second electrode current collector plate made of metal foil, such as aluminium or an aluminium alloy. The second electrode plate may include a second electrode tab (e.g., a second non-coating portion) that is a portion of the second electrode current collector not coated with the second electrode active material. The second electrode tab may be a passage through which current flow between the second electrode plate and a second current collector. In some embodiments, the second electrode tab may be provided by being cut in advance to protrude to the other side when the second electrode plate is manufactured and may protrude more to the other side than (e.g., may protrude beyond) the separator without separate cutting.

In some embodiments, the first electrode tab may be disposed on a side surface at a left end of the electrode assembly 110, and the second electrode tab may be disposed on a side surface at a right end of the electrode assembly 110 or may disposed on one surface in the same direction as the first electrode tab. In FIG. 2, an embodiment in which the left and right sides of the electrode assembly 110 are, for convenience of explanation, based on the secondary battery 100 is illustrated, but the position of the secondary battery 100 may be changed when the secondary battery 100 is rotated left and right or up and down.

A first electrode tab of the first electrode plate and a second electrode tab of the second electrode plate may be disposed on both ends (e.g., opposite ends) of the electrode assembly 110 as described above, respectively. In some embodiments, the electrode assembly 110 may be accommodated in the case 130 together with an electrolyte. In some embodiments, in the electrode assembly 110, the first current collector and the second current collector may be welded and connected to the first electrode tab of the first electrode plate and the second electrode tab of the second electrode plate, which are exposed at both sides, respectively.

Then, the case 130 may accommodate the electrode assembly 110. For example, the case 130 may have a substantially rectangular parallelepiped shape to provide a space for accommodating the electrode assembly 110 and the electrolyte therein and may have an opening connecting external and internal spaces to each other defined in one surface of the rectangular parallelepiped shape. The opening may allow the electrode assembly 110 to be inserted into the case 130.

However, the present disclosure is not limited thereto, and the case 130 may have various, suitable shapes, such as a circular shape or a pouch shape. In some embodiments, the case 130 may be made of a metal, such as aluminium, aluminium alloy, or nickel-plated steel, or may be a laminated film or plastic that constitutes the pouch or case.

The cap plate 150 may be installed in the opening of the case 130 to seal the opening in the case 130. For example, the case 130 and the cap plate 150 may be made of aluminium and welded to each other.

In some embodiments, the cap plate 150 may further include terminal holes (e.g., terminal openings) H1 and H2 and an electrolyte injection port. The electrolyte injection port may allow the electrolyte to be injected into the case 130 after coupling and welding the cap plate 150 to the case 130.

Negative and positive terminals 21 and 22 may be electrically and mechanically connected to the electrode assembly 110 and installed in the terminal holes H1 and H2 in the cap plate 150. In some embodiments, the negative and positive terminals 21 and 22 may be electrically connected to the negative and positive terminals 21 and 22 of the electrode assembly 110, respectively. In some embodiments, the electrode assembly 110 may be drawn to the outside of the case 130 through the negative and positive terminals 21 and 22.

A vent part 170 may be defined to pass through a surface of the case 130 opposite to the cap plate 150. For example, the cap plate 150 may be coupled to an upper opening in the case 130, and the vent part 170 may be provided in a lower, bottom surface of the case 130 opposite to the cap plate 150 on the case 130. A high-temperature gas and pressure, which are generated inside the case 130, may be discharged to the outside of the case 130 through the vent part 170. In some embodiments, the vent part 170 may have a vent hole (e.g., a vent opening) and a vent plate sealed and coupled around (or to) the vent hole. A recess part may be provided in the above-described vent part formation surface of the case 130, for example, in the lower bottom surface, and the vent hole may be defined inside the recess part. The vent plate may seal the vent hole and may be installed so that if a cell event (e.g., a thermal runaway) occurs, the vent plate is cut (or bursts) to discharge the internal pressure of the secondary battery 100. In some embodiments, if the internal pressure reaches a reference (or set) pressure, the vent plate may be cut (or may burst) to open the vent hole. The vent plate may have a notch that guides (or facilitates) the cutting (or bursting).

As illustrated in FIG. 2, a spacer 200 is disposed between the lower portion (or lower surface) of the electrode assembly 110 and the vent part 170, that is, between the electrode assembly 110 and the vent part formation surface in the case 130. When the electrode assembly 110 is accommodated in the case 130, a clearance may occur (e.g., a space may be present) between the lower end of the electrode assembly 110 and the vent formation surface of the case 130, that is, the lower bottom surface of the case 130, and the spacer 200 may be interposed into the clearance space to fix the electrode assembly 110 within the case 130 to prevent the electrode assembly 110 from being shaken and to suppress vibration in a height direction. In some embodiments, the spacer 200 may be made of a material having electrolyte resistance and absorbs an external impact due to characteristics or morphological characteristics of the material itself. In addition, the spacer 200 may be made of an insulating material to maintain insulation (e.g., electrical insulation) between the electrode assembly 110 and the case 130.

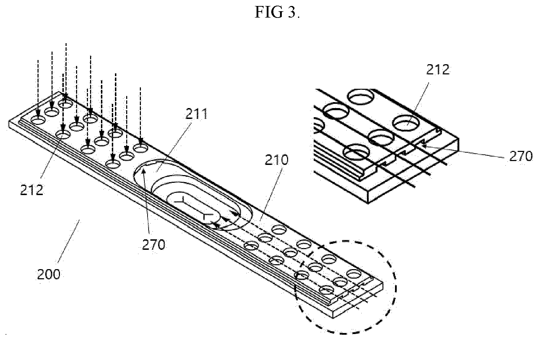

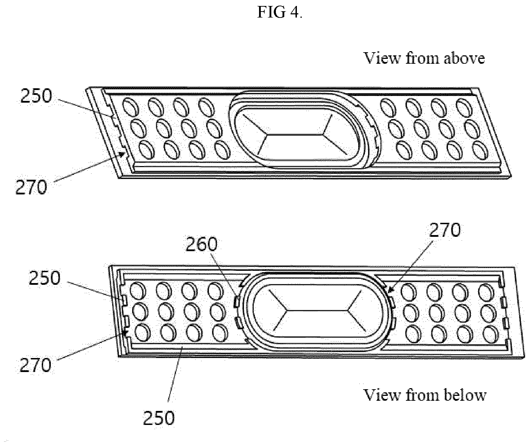

FIG. 3 illustrates a perspective view of the spacer 200 of the secondary battery 100 shown in FIG. 1, and FIG. 4 illustrates a view of the spacer 200 shown in FIG. 3 viewed from various angles. Referring to FIGS. 3 and 4, the spacer 200 has a surface portion (e.g., an upper surface) 210 that is in contact with the electrode assembly 110 and a space portion (e.g., a space or a void) 230 below the surface portion 210. Hereinafter, a structure of the spacer 200 will be described in more detail.

The surface portion 210 of the spacer 200 is a portion that is in contact with the electrode assembly 110 and may have a flat plate shape. An opening 211 is defined in the surface portion 210 of the spacer 200 in an area corresponding to the vent part 170, for example, in a longitudinal center portion of the spacer 200. Because the vent part 170 is exposed to the inside of the case 130 through the opening 211, if a cell event occurs in the secondary battery 100, a gas may flow directly into the vent part 170 to be discharged from the case 130.

At least one gas discharge hole (e.g., at least one gas discharge opening) 212 is defined in the surface portion 210 around the opening 211. The gas discharge hole 212 may be defined to pass through the surface portion 210 of the spacer 200 and may be provided in plurality arranged in (e.g., adjacent to each other in) longitudinal and transverse directions in the surface portion 210. For example, in the embodiment illustrated in FIG. 3, twelve gas discharge holes 212 are formed at each side of the opening 211 in the longitudinal direction of the spacer 200.

The space portion 230 may be defined below the gas discharge hole 212, and the gas generated in the case 130 may be disposed to the outside through the vent part 170 via the space portion 230 and the gas discharge hole 212. Referring to FIGS. 2 to 4, the spacer 200 may have an outer wall 250 that protrudes downwardly from a circumference (or periphery) of the surface portion 210. The outer wall 250 may be continuously disposed along a long side and a short side of the spacer 200. In some embodiments, the spacer 200 may have an inner wall 260 that similarly protrudes downwardly around the opening 211. The surface portion 210 may be spaced apart from (e.g., may form a gap between) the bottom surface of the case 130 by the outer wall 250 and the inner wall 260, and the gap may be the space portion 230. That is, the space portion 230 may be surrounded by (or may be formed by or between) the surface portion 210, the outer wall 250, the inner wall 260, and the lower bottom surface of the case 130.

As described above, at least one gas discharge hole 212 may be provided to vertically pass through the surface portion 210, and thus, as indicated by the vertical arrows in FIG. 3, a gas movement passage may be provided in a vertical direction.

According to some embodiments, the gas movement passage may also be provided in a horizontal direction as indicated by the horizontal arrows in FIG. 3. In some embodiments, a plurality of exhaust holes 270 may be provided in the spacer 200, and the spacer 200 may be disposed to be spaced a distance (e.g., a predetermined distance) from the longitudinal inner surface of the case 130.

In some embodiments, the plurality of exhaust holes 270 may be defined in the outer wall 250 disposed on the short side of the spacer 200. In some embodiments, the plurality of exhaust holes 270 may also be provided in the inner wall 260. For example, in the embodiment illustrated in FIG. 3, three exhaust holes 270 may be provided in each of the outer wall 250 and the inner wall 260. As described above, because the outer wall 250 is continuously disposed along the long side of the spacer 200, the gas may not flow between the outer wall 250 and the bottom surface of the case 130 in the longitudinal direction of the spacer 200. In some embodiments, the outer wall 250 may be continuously disposed along the short side of the spacer 200, but an exhaust hole 270 may be provided in the short side to provide a movement passage for gas. In some embodiments, the short side of the spacer 200 may be disposed to be spaced a distance (e.g., a predetermined distance) from the longitudinal inner surface of the case 130. Due to this structure, as illustrated in FIG. 2, the gas in the case 130 may pass through the exhaust hole 270 provided in the short side through the space between the inner surface of the case 130 and the short side of the spacer 200 to be introduced into the space portion 230 and then discharged to the outside through the vent part 170.

According to some embodiments, the exhaust holes 270 in the outer wall 250 and the exhaust holes 270 in the inner wall 260 may be formed in one-to-one correspondence with each other, and the corresponding exhaust holes 270 may be arranged in a straight line. The same number of exhaust holes 270 may be provided in the inner wall 260 and the outer wall 250, and the facing exhaust holes 270 may be arranged in a straight line to induce a straight flow of the gas. As a result, the gas introduced through the exhaust hole 270 of the outer wall 250 may be discharged to the exhaust hole 270 in the inner wall 260 without causing an eddy current within the space portion 230 or while generating a minimal eddy current within the space 230.

In some embodiments, the gas discharge holes 212 arranged in the longitudinal direction along the surface portion 210 may be disposed above a straight line (or a straight path) connecting (e.g., fluidly connecting) the exhaust hole 270 of the outer wall 250 to the exhaust hole 270 of the inner wall 260. As a result, the gas introduced in the vertical direction through the gas discharge hole 212 may be discharged to the exhaust hole 270 in the inner wall 260 while generating a minimum eddy current by being combined with the above-described straight flow.

According to embodiments of the present disclosure, the gas movement passage may be provided in a spacer, the gas discharge hole 212 may be provided in a plane of the spacer 200 to induce the discharge of the gas in the vertical direction, and the exhaust hole 270 may be provided in the side surface of the spacer 200 to induce the discharge of the gas in the horizontal direction. In some embodiments, the spacer 200 provided in the secondary battery 100 may both fix the electrode assembly 110 while also acting as the gas exhaust passage.

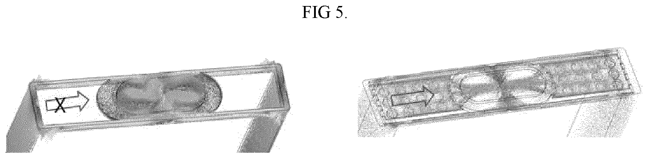

Referring to FIG. 5, the left side image shows an experimental result of a gas flow in a secondary battery to which a related art spacer that does not have the gas discharge passage is applied, and the right side image shows an experimental result of a gas flow in a secondary battery that is provided with the spacer according to an embodiment of the present disclosure. As can be seen, because the spacer according to an embodiment of the present disclosure has the exhaust hole in the side surface to allow the horizontal discharge of the gas, the gas flows evenly and actively in the horizontal direction of the spacer.

According to some embodiments, the spacer both fixes the electrode assembly and also allows for gas discharge to be smoothly performed through the vent part provided at the lower end of the case through the discharge passage provided in the spacer.

However, the aspects and features of the present disclosure are not limited to the above-described aspects and features, and other aspects and features not mentioned can be clearly understood by those skilled in the art from the description of the present disclosure and the claims and their equivalents.

As described above, while embodiments of the present disclosure have been described herein, it will be apparent to those skilled in the art that various changes and modifications may be made without departing from the scope of the present disclosure as defined in the following claims and their equivalents.

Embodiments are set out in the following clauses:
Clause 1. A secondary battery comprising:
   an electrode assembly;
   a case configured to accommodate the electrode assembly; and
   a cap plate coupled to one opening of the case,
   wherein a vent part is provided to be penetrated in a surface facing the cap plate of the case, and a spacer is disposed in the case between a lower portion of the electrode assembly and the vent part,
      the spacer comprises a surface portion that is in contact with the electrode assembly and a space portion below the surface portion,
      an opening is defined in an area of the surface portion of the spacer, which corresponds to the vent part, and at least one gas discharge hole is defined around the opening, and
   a gas generated in the case is discharged to the outside through the vent part via the space portion through the gas discharge hole of the spacer.
Clause 2. The secondary battery of clause 1, wherein the gas discharge hole is defined to pass through a surface portion of the spacer and is provided in plurality, which are arranged in longitudinal and transverse directions in the surface portion.
Clause 3. The secondary battery of clause 2, wherein the spacer comprises an outer wall protruding downward from a circumference of the surface portion and an inner wall protruding downward from a circumference of the opening, and
   the surface portion is spaced apart from a lower bottom surface of the case, in which the vent part is provided, by the outer wall and the inner wall, and the space portion is surrounded by the surface portion, the outer wall, the inner wall, and the lower bottom surface.
Clause 4. The secondary battery of clause 3, wherein the outer wall is continuously disposed on a long side and a short side of the spacer,
   a plurality of exhaust holes are provided in the outer wall and the inner wall disposed on the short side, and
   the inside of the case communicates with the space portion of the spacer by the exhaust holes.
Clause 5. The secondary battery of clause 4, wherein the exhaust hole of the outer wall and the exhaust holes of the inner wall one-to-one correspond to each other, andthe corresponding exhaust holes are arranged in a straight line.
Clause 6. The secondary battery of clause 5, wherein the gas discharge holes arranged in the longitudinal direction are disposed above a straight line that connects the exhaust holes of the outer wall to the exhaust holes of the inner wall.
Clause 7. The secondary battery of any one of clauses 3 to 6, wherein the spacers are disposed to be spaced a predetermined distance from an inner surface of the case in the longitudinal direction.

## Claims

1. A secondary battery comprising:
an electrode assembly;
a case accommodating the electrode assembly;
a cap plate coupled to an opening in the case; and
a spacer in the case,
wherein the case has a vent part extending through a surface facing the cap plate,
wherein the spacer is accommodated in the case between a lower portion of the electrode assembly and the vent part,
wherein the spacer has:
a surface portion contacting the electrode assembly and a space portion below the surface portion;
an opening in an area of the surface portion corresponding to the vent part; and
a gas discharge hole extending around the opening, and
wherein gas generated in the case is discharged to the outside through the vent part via the space portion and the gas discharge hole in the spacer.

2. The secondary battery as claimed in claim 1, wherein the gas discharge hole extends through the surface portion of the spacer and is provided in plurality, and
wherein the plurality of gas discharge holes are arranged in longitudinal and transverse directions in the surface portion.

3. The secondary battery as claimed in claim 2, wherein the spacer has an outer wall protruding downwardly along a periphery of the surface portion and an inner wall protruding downwardly along a periphery of the opening in the spacer,
wherein the surface portion is spaced apart from a lower bottom surface of the case in which the vent part is formed by the outer wall and the inner wall, and
wherein the space portion is surrounded by the surface portion, the outer wall, the inner wall, and the lower bottom surface of the case.

4. The secondary battery as claimed in claim 3, wherein the outer wall is continuously arranged along a long side and a short side of the spacer,
wherein a plurality of exhaust holes are in the outer wall and the inner wall on the short side, and
wherein the inside of the case communicates with the space portion of the spacer via the exhaust holes.

5. The secondary battery as claimed in claim 4, wherein the exhaust holes in the outer wall and the exhaust holes in the inner wall are in one-to-one correspondence with each other, and
wherein the corresponding exhaust holes are arranged in a straight line.

6. The secondary battery as claimed in claim 5, wherein the gas discharge holes arranged in the longitudinal direction are arranged above a straight path that connects the exhaust holes in the outer wall to the exhaust holes in the inner wall.

7. The secondary battery as claimed in any one of claims 3 to 6, wherein the spacer is spaced a distance from an inner surface of the case in the longitudinal direction.
